# EUROPÄISCHE PATENTSCHRIFT

(11) **EP 1 038 184 B1**
(45) Veröffentlichungstag und Bekanntmachung des Hinweises auf die Patenterteilung: **04.09.2002**
(21) Anmeldenummer: 98963543.8
(22) Anmeldetag: 08.12.1998
(51) Int. Cl.: G01N 35/10, B01L 3/02

(54) **VORRICHTUNG UND VERFAHREN ZUR BILDAUFNAHME AN TROPFENERZEUGENDEN DISPENSIERKÖPFEN**
METHOD AND DEVICE FOR RECORDING AN IMAGE ON DROP-PRODUCING DISPENSING HEADS
DISPOSITIF ET PROCEDE POUR REALISER DES PRISES DE VUES AU NIVEAU DE TETES DE DISTRIBUTION PRODUISANT DES GOUTTES

(30) Priorität: 08.12.1997 DE 19754459
(43) Veröffentlichungstag der Anmeldung: 27.09.2000
(73) Patentinhaber: Max-Planck-Gesellschaft zur Förderung der Wissenschaften e.V., 80539 München (DE)
(72) Erfinder: KIETZMANN, Markus, D-82515 Wolfratshausen (DE); EICKHOFF, Holger, D-14195 Berlin (DE)
(74) Vertreter: Hertz, Oliver, Dr.
(86) Internationale Anmeldenummer: EP9807952
(87) Internationale Veröffentlichungsnummer: WO99030169

(56) Entgegenhaltungen:
- EP-A- 0 364 203
- EP-A- 0 641 599
- WO-A-97/44134
- US-A- 5 601 980
- LEMMO A V ET AL: "CHARACTERIZATION OF AN INKJET CHEMICAL MICRODISPENSER FOR COMBINATORIAL LIBRARY SYNTHESIS" ANALYTICAL CHEMISTRY, Bd. 69, Nr. 4, 15. Februar 1997, Seiten 543-551, XP000681609

## Beschreibung

Die Erfindung betrifft eine Vorrichtung und ein Verfahren zur Aufnahme von Tropfen- oder Partikelbildern an einem Dispensierkopf, insbesondere zur stroboskopischen Bildaufnahme von Mikrotropfen während der Bildung an einer Dispenserspitze oder nach der Ablösung von dieser.

Ein Dispensierkopf besteht aus einer Vielzahl von elektrisch betätigbaren Dispensern (z.B. elektrisch betätigbare Mikropipetten), die jeweils dazu eingerichtet sind, in Reaktion auf ein elektrisches Auslösesignal einen Mikrotropfen abzugeben. Hierzu ist an jedem Dispenser eine Auslöseeinrichtung vorgesehen, die einen Druckpuls erzeugt, dessen Parameter von der Dauer und Amplitude des Auslösesignals abhängen.

Eine wichtige Anwendung von Dispensierköpfen liegt im Bereich der Biotechnologie, Gentechnik oder chemischen Technologie, falls kleinste Mengen von Wirksubstanzen in Form von Mikrotropfen auf Substraten kombiniert zur Reaktion gebracht werden sollen. Für einen wirksamen Reaktionsablauf ist es erforderlich, daß die Mikrotropfen (Volumen im Submikroliterbereich) mit reproduzierbarer Tropfengröße und -geschwindigkeit genau auf dem Reaktionssubstrat positioniert werden. Es besteht daher ein Interesse an Systemen zur Analyse und Auswertung des Tropfenabrisses vom Dispenser, der Tropfenbewegungsrichtung, der Tropfengröße und gegebenenfalls der Tropfenanzahl.

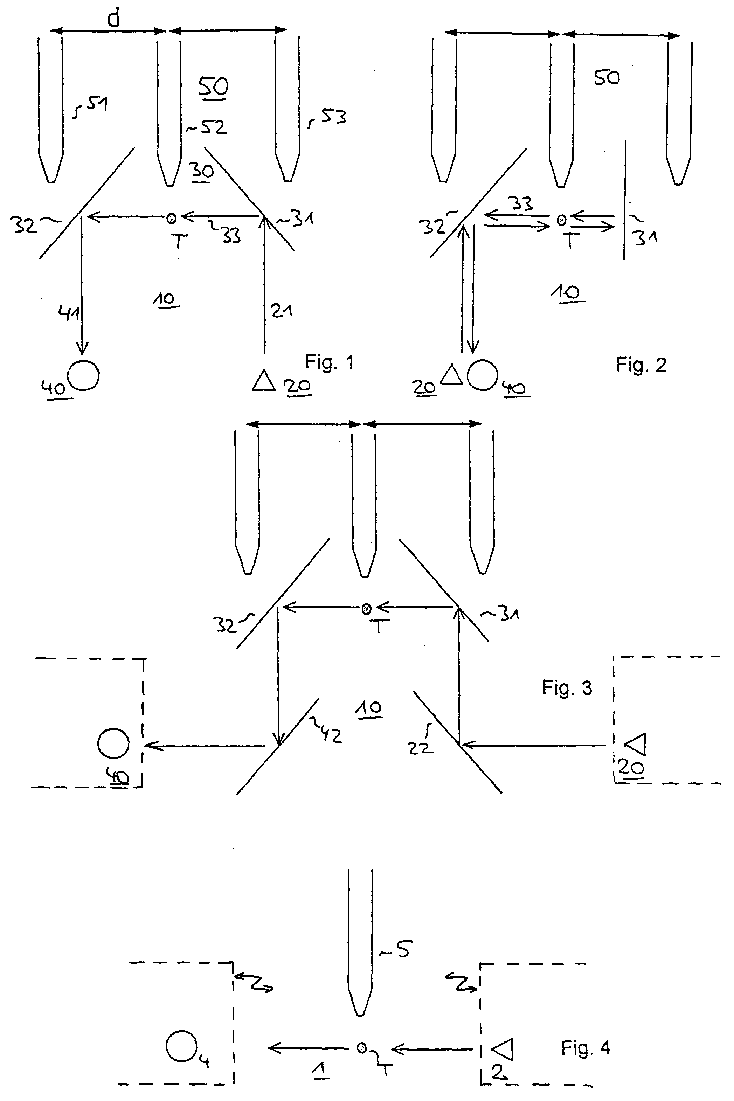

Das Prinzip eines derartigen, allgemein bekannten Systems ist in Fig. 4 (Stand der Technik) gezeigt. Eine Bildaufnahmeanordnung 1 besteht aus einer Stroboskoplampe 2 und einer Kamera 4. Die Kamera 4 ist mit einem Objektiv (üblicherweise Mikroskopobjektiv) ausgestattet, das auf einen Tropfenabgabebereich fokussiert ist, der sich vor der Mikropipettenspitze 5 befindet. Von der Stroboskoplampe 2 zur Kamera 4 erstreckt sich ein gerader Lichtweg, der den Tropfenabgabebereich kreuzt, so daß ein Tropfen T bei der Ablösung oder im Flug mit der Kamera 4 aufgenommen werden kann. Eine derartige Bild aufnahmeanordnung ist in der Regel als laborfestes System vorgesehen, an das der Dispensierkopf so herangefahren wird, daß die Mikropipettenspitze in den Lichtweg ragt. Die Realausdehnungen der Kamera 4 und der Stroboskoplampe 2 sind beispielhaft gestrichelt eingezeichnet. Für eine genaue Tropfenbeoachtung ist es erforderlich, daß die Tropfenabbildung unter gleichbleibenden Beleuchtungs- und Bildaufnahmebedingungen erfolgt. Dies führt jedoch bei der Verwendung von Mehrkanal-Dispensierköpfen mit einer Vielzahl von flächig angeordneten Dispensern zu dem folgenden Problem.

Wenn die Dispenser eines Mehrkanal-Dispensierkopfes über eine Fläche verteilt sind, deren charakteristische Ausdehnung größer als die Objektivbrennweite der Kamera 4 ist, kommt es bei der Positionierung eines zu beobachtenden Dispensers im Fokus des Objektivs zu einer Behinderung zwischen dem Dispensierkopf und dem Kameraaufbau, der in die Fahrebene des Dispensers ragt (siehe Pfeil). Entsprechendes gilt beleuchtungsseitig, da auch der Abstand von der Stroboskoplampe zum Tropfen möglichst gleich bleiben soll. Da die Objektivbrennweite gewöhnlich im Bereich von 10 mm bis 30 mm liegt, tritt dieses Problem bei einem Dispenserabstand von beispielsweise 9 mm bereits bei geringen Dispenserzahlen an einem Dispensierkopf auf. Das herkömmliche System versagt vollständig bei Dispensierköpfen mit matrixartigen Dispenseranordnungen von beispielsweise 4 * 4 oder 8 * 12 Dispenserreihen.

Aus WO 97/44134 sind Vorrichtungen und ein Verfahren zur Überwachung der Mikrotropfenabgabe aus gepulsten Mikrotropfenschußvorrichtungen bekannt. Die Mikrotropfenabgabe wird unter Verwendung eines piezoelektrischen Wandlers gesteuert. Eine Charakterisierung der Tropfenabgabe aus Mikrodispensern wird auch in der Publikation von A. V. Lemmo et al in "Anal. Chem." Bd. 69, 1997, Seite 543 ff., beschrieben.

Die Aufgabe der Erfindung ist es, eine verbesserte Vorrichtung zur Tropfenbildaufnahme anzugeben, die eine Bildaufnahme an Mehrkanal-Dispensierköpfen unter für alle Dispenser gleich bleibenden Bedingungen ermöglicht. Die Aufgabe der Erfindung besteht auch in der Angabe einer Verfahrensweise zum Einsatz einer derartigen Bildaufnahmeanordnung.

Diese Aufgabe wird durch Vorrichtungen und ein Verfahren gemäß den Patentansprüchen 1, 7 bzw. 9 gelöst. Vorteilhafte Ausführungsformen der Erfindung ergeben sich aus den abhängigen Ansprüchen.

Mit der Erfindung wird eine neue Bildaufnahmeanordnung geschaffen, bei der der Lichtweg von einer Beleuchtungseinrichtung zu einer Bildaufnahmeeinrichtung, der durch einen zu erfassenden Tropfenabgabebereich eines tropfengebenden Dispensers führt, durch eine Umlenkeinrichtung modifiziert wird. Die Umlenkeinrichtung ist dazu vorgesehen, den Lichtweg von der Beleuchtungseinrichtung zur Bildaufnahmeeinrichtung über eine Meßlichtstrecke zu führen, die einen genügenden senkrechten Abstand von den Beleuchtungs- und Bildaufnahmeeinrichtungen besitzt und in der wahlweise jeder zu beoachtende Dispenser eines Dispensierkopfes behinderungsfrei positionierbar ist.

Die Umlenkeinrichtung umfaßt mindestens zwei Reflektorelemente (Spiegel), die die Meßlichtstrecke aufspannen. Die Meßlichtstrecke verläuft senkrecht zur Längsausdehnung des jeweils zu vermessenden Dispensers und tritt an der Spitze des jeweiligen Dispensers vorbei, so daß ein Tropfen unmittelbar nach der Abgabe vom Dispenser optisch erfaßt werden kann. Die Reflektorelemente sind daher so ausgebildet, daß sie teilweise in den Abstand zwischen benachbarten Dispensern eines Dispensierkopfes hineinragen. Die Reflektorelemente sind so angeordnet, daß der Lichtweg von der Beleuchtungseinrichtung zur Bildaufnahmeeinrichtung über die Meßlichtstrecke in einer Ebene verläuft. Die Reflektorelemente bilden einen Abstand, in den der zu vermessende Dispenser fahrbar ist, wobei die Tropfenabgabe entlang einer geraden Bahn erfolgt, die parallel zu der Ebene des Meßlichts verläuft.

Gemäß einer bevorzugten Gestaltung sind die Beleuchtungs- und Bildaufnahmeeinrichtungen in einer Bezugsebene (beispielsweise Labortischebene oder dgl.) angeordnet, die in Bezug auf die Längsausdehnung der Dispenser bzw. die Tropfenabgaberichtung einen senkrechten Abstand von einer durch die Meßlichtstrecke gebildeten Bezugslinie besitzt. Zu den Beleuchtungs- und Bildaufnahmeeinrichtungen werden alle optischen Komponenten gezählt, die das Meßlicht in einem Bereich bereitstellen, der in Meßposition unter der Fläche liegt, die durch die Dispenser des Dispensierkopfs bei der Bildaufnahme aufgespannt wird.

Gegenstand der Erfindung ist auch ein Verfahren zur Analyse von Tropfenparametern, bei dem ein Dispensierkopf über einer Bildaufnahmeanordnung mit Beleuchtungs- und Bildaufnahmeeinrichtungen und einer Umlenkeinrichtung so positioniert wird, daß ein zu beobachtender Dispenser in eine Meßlichtstrecke ragt, die durch die Umlenkeinrichtung mit Abstand von den Beleuchtungs- und Bildaufnahmeeinrichtungen gebildet wird.

Die Erfindung besitzt den Vorteil, daß eine Bildaufnahme zur Tropfenanalyse an Dispensierköpfen beliebiger Größe für alle Dispenser unter gleichbleibenden optischen Bedingungen erfolgen kann. Die Umlenkeinrichtung der erfindungsgemäßen Bildaufnahmeanordnung erlaubt eine freie Positionierbarkeit des Dispensierkopfs relativ zur Bildaufnahmeanordnung. Die Bildaufnahmeanordnung besitzt einen einfachen Aufbau und erlaubt unter Verwendung einer Bildbearbeitung nach der Bildaufnahme eine einfache Korrektur von gegebenenfalls auf tretenden Bildstörungen.

Weitere Einzelheiten und Vorteile der Erfindung werden im folgenden unter Bezug auf die beigefügten Zeichnungen beschrieben. Es zeigen:
- Fig. 1:: eine erste Ausführungsform einer Bildaufnahmeanordnung gemäß der Erfindung;
- Fig. 2:: eine zweite Ausführungsform einer Bildaufnahmeanordnung gemäß der Erfindung;
- Fig. 3:: eine dritte Ausführungsform einer Bildaufnahmeanordnung gemäß der Erfindung; und
- Fig. 4:: eine herkömmliche Bildaufnahmeanordnung (Stand der Technik).

Die Erfindung wird im folgenden unter Bezug auf eine Dispenserreihe beschrieben, kann aber in gleicher Weise auch mit Vorteil bei der Tropfenanalyse von Einzeldispensern oder matrixartig, flächig angeordneten Dispensergruppen angewendet werden. Die Erfindung ist nicht auf die beschriebene Stroboskoptechnik beschränkt, sondern kann auch mit jeder anderen genügend schnell ansprechenden Bildaufnahmetechnik realisiert werden.

Eine Bildaufnahmeanordnung 10 umfaßt gemäß Fig. 1 eine Beleuchtungseinrichtung 20, eine Umlenkeinrichtung 30 und eine Bildaufnahmeeinrichtung 40. Die Ausdehnung der einzelnen Komponenten (siehe z.B. Fig. 3) sind aus Übersichtlichkeitsgründen nicht gesondert angegeben. Die Beleuchtungseinrichtung 20 enthält eine Stroboskoplampe, die beispielsweise durch eine gepulste, lichtemittierende Diode (LED) gebildet wird. Die LED wird vorzugsweise mit einer Überspannung oberhalb der normalen Betriebsspannung betrieben, um im Pulsbetrieb eine möglichst hohe Leuchtdichte zu erzielen. Die Beleuchtungseinrichtung kann auch eine andere Stroboskoplampe, beispielsweise in Form eines geeignet aufgeweiteten und gepulsten Lasers enthalten. Die Bildaufnahmeeinrichtung 40 wird vorzugsweise durch eine CCD-Kamera mit einem Mikroskopobjektiv der Brennweite im Bereich von 10 mm bis 30 mm gebildet. Es sind jedoch auch andere Detektorsysteme mit beliebigen Kameras (ggf. auch eindimensional in Form einer CCD-Zeile) und Normal- oder Makroobjektiven möglich, deren Aufbau an die Parameter des zu erfassenden Tropfens angepaßt ist.

Von der Beleuchtungseinrichtung 20 führt ein Beleuchtungslichtweg 21 zur Umlenkeinrichtung 30, die eine Meßlichtstrecke 33 aufspannt, an die sich der Bildaufnahmelichtweg 41 zur Bildaufnahmeeinrichtung 40 anschließt. Die Meßlichtstrecke 33 führt durch den Tropfenabgabebereich, durch den sich ein vom zu beobachtenden Dispenser 52 abgegebener Tropfen T bewegt. Die durch den Tropfenabgabebereich führende Meßlichtstrecke 33 erstreckt sich entlang einer Bezugslinie, die in einer Ebene liegt, welche unmittelbar zu der Fläche benachbart ist, die durch die Dispenserspitzen des Dispensierkopfs aufgespannt wird. Die Umlenkeinrichtung 30, die durch die ebenen Spiegel 31, 32 gebildet wird, erlaubt es nun, unter Beibehaltung eines vorbestimmten Beleuchtungsabstands von der Beleuchtungseinrichtung 20 zum Tropfen T bzw. eines vorbestimmten Fokusabstands vom Tropfen T zur Bildaufnahmeeinrichtung 40 die Beleuchtungs- und Bildauf- nahmeeinrichtungen mit einem genügenden Abstand von der Ebene, in der die Bezugslinie liegt, bzw. mit einem genügenden senkrechten Abstand von der Bezugslinie zu positionieren, so daß eine Bewegung des Dispensierkopfes parallel zu der genannten Ebene nicht durch die Beleuchtungsund Bildaufnahmeeinrichtungen behindert wird.

Die Spiegel 31, 32 sind gegenüber der Meßlichtstrecke 33 um vorbestimmte Umlenkwinkel (z.B. 45°) geneigt und mit einem Abstand der Spiegelmitten angeordnet, der etwa dem Abstand d der Dispenser 51, 52, 53, ... des Dispenspierkopfes 50 entspricht. Die aufeinanderzuweisenden Ränder der Spiegel 31, 32 sind voneinander beabstandet, so daß ein zu beobachtender Dispenser zwischen die Spiegel 31, 32 ragen kann. Der Tropfenabgabebereich des Dispensers wird somit durch die Spiegel der Umlenkeinrichtung 30 begrenzt. Die Tropfenabgabe erfolgt in der Ebene, die durch die Lichtwege 21, 33, 41 aufgespannt wird.

Gemäß der in Fig. 2 gezeigten alternativen Gestaltung umfaßt die Umlenkeinrichtung 30 einen gegenüber der Meßlichtstrecke 33 geneigten Spiegel 32 und einen auf dieser senkrecht stehenden Spiegel 31. In diesem Fall ist der Beleuchtungslichtweg 21 mit dem Bildaufnahmelichtweg 41 identisch. Die Beleuchtungsund Bildaufnahmeeinrichtungen 20, 40 sind mit einer geeigneten (nicht dargestellten) Strahlteilereinrichtung versehen. Wie bei der Ausführungsform gemäß Fig. 1 sind die Beleuchtungsund Bildaufnahmeeinrichtungen 20, 40 mit Abstand von der Bezugsebene angeordnet, in der die Meßlichtstrecke 33 verläuft.

Bei der Anordnung gemäß Fig. 2 kann der senkrecht auf der Meßlichtstrecke 33 stehende Umlenkspiegel 31 weggelassen werden. In diesem Fall wird nicht wie bei Fig. 1 der Schatten des rückseitig beleuchteten Tropfens, sondern das Auflichtbild des Tropfens aufgenommen. Bei einer weiteren Modifizierung ist es auch möglich, den Beleuchtungslichtweg 21 vom Bildaufnahmelichtweg 41 zu trennen und die Beleuchtungseinrichtung 20 aneiner geeigneten Position mit Abstand vom Dispensierkopf 50 anzuordnen. In diesem Fall umfaßt die Umlenkeinrichtung 30 nur einen ebenen Spiegel 32, da der im Auflicht aufgenommene Tropfen selbst als Reflektor wirkt. Dementsprechend erstreckt sich die Meßlichtstrecke 33 vom Tropfen T zum Umlenkspiegel 32.

Eine weitere Gestaltung der Erfindung ist in Fig. 3 illustriert. Die Beleuchtungs- und Bildaufnahmeeinrichtungen 20, 40 wirken jeweils mit Umlenkspiegeln 22, 42 zusammen. Im übrigen entspricht die Umlenkeinrichtung 30 dem Aufbau gemäß Fig. 1. Der Aufbau gemäß Fig. 3 ist vorteilhafterweise mit herkömmlichen Bildaufnahmeanordnungen (s. Fig. 4) kompatibel. Die Beleuchtungs- und Bildaufnahmeeinrichtungen 20, 40 werden auf einem gemeinsamen, ebenen Träger (z.B. Labortisch) angeordnet. Der gerade Lichtweg zwischen beiden Einrichtungen wird durch die Spiegelkombination 31, 32, 22, 42 unterbrochen. Es werden Teillichtwege gebildet, die insbesondere die Meßlichtstrecke 33 mit Abstand von der Trägerebene enthalten. Die Fahrebene der Dispenser besitzt einen genügenden Abstand von den gestrichelt gezeichneten körperlichen Ausdehnungen der Beleuchtungs- und Bildaufnahmeeinrichtungen.

Zur Tropfenanalyse wird ein Dispensierkopf so in Bezug auf die Bildaufnahmeanordnung positioniert, daß die Meßlichtstrecke den Tropfenabgabebereich eines interessierenden Dispensers durchläuft. Beim Einsatz von Mikropipetten für die oben genannten Anwendungen kann der Tropfenabgabebereich eine charakteristische Größe von rd. 5 mm unterhalb der Dispenserspitze besitzen. Die Länge der Meßstrecke beträgt dann rd. 10 mm. Die Durchmesser der zu erfassenden Tropfen betragen rd. 10 µm bis 100 µm. Wenn sich der Dispenser in Meßposition befindet, erfolgt zunächst eine Referenzbildaufnahme. Bei der Referenzbildaufnahme werden Stroboskop-Blitzbilder des tropfenfreien Lichtweges aufgenommen. Es werden beispielsweise 10 Stroboskopblitze (Länge rd. 3 µs) aufgenommen und in einem (nicht dargestellten) Bildverarbeitungssystem gespeichert. Anschließend erfolgt die Tropfenbildaufnahme, die für eine vollständige Tropfenanalyse die Aufnahme von Bildern aller Phasen der Tropfenentstehung, -ablösung und -bewegung umfaßt. Hierzu wird eine Folge von Tropfen vom Dispenser abgegeben, wobei eine Verzögerungszeit zwischen einem jeweiligen Auslösesignal des elektrisch betätigten Dispensers und einem Triggersignal der Stroboskop-Beleuchtungseinrichtung für jeden Tropfen verändert eingestellt wird. Je nach den Parametern des Auslösesignals kann die Verzögerungszeit im Bereich von bis zu 500 µs liegen. Die Folge von Tropfenbildern mit verschiedenen Verzögerungszeiten entsprechend den verschiedenen Phasen der Tropfenentstehung werden abgespeichert und einer Digitalisierung und Bildverarbeitung unterzogen, die im wesentlichen eine Differenzbildung mit den Referenzaufnahmen beinhaltet. Damit wird ein durch die Spiegel der Umlenkeinrichtung eingeführtes Rauschen und ein gegebenenfalls an der LED der Beleuchtungseinrichtung vorhandenes Leuchtdichteprofil kompensiert. Es kann vorgesehen sein, daß für jede Tropfenbildungsphase eine Gruppe von Tropfenbildern (z.B. 10) unter konstante Aufnahmebedingungen (insbesondere konstante Verzögerungszeit) aufgenommen und eine Akkumulation der Einzelbilder zur Verbesserung der Bildqualität vorgenommen wird. Die Arbeitsfrequenz der Bildaufnahmeeinrichtung (z.B. Bildauslesefrequenz an einer CCD-Kamera) wird dann vorzugsweise auf die Tropfenfrequenz derart abgestimmt, daß die Tropfenfrequenz einem ganzzahligen Vielfachen der Arbeitsfrequenz entspricht (z.B. f_{Tropfen} = 100 Hz, f_{Kamera} = 50 Hz).

Es schließt sich eine Analyse der korrigierten Tropfenbilder in Bezug auf die Tropfengröße (Tropfenvolumen, Wirksubstanz menge) und die Bewegungseigenschaften der Tropfen an. Die Bewegungseigenschaften umfassen beispielsweise die Tropfenbewegungsrichtung und die Tropfengeschwindigkeit. Falls die Tropfenbewegungsrichtung nicht mit der Dispenserausrichtung (beispielsweise vertikale Ausrichtung senkrecht zur Meßlichtstrecke) übereinstimmt, wird eine Korrektur des Dispensers oder eine Reinigung der Dispenserspitze veranlaßt, an der sich gegebenenfalls feste Partikel einer Wirksubstanz abgesetzt haben. Die Geschwindigkeitsmessung erfolgt durch Auswertung von zwei Tropfenbildern von abgelösten Tropfen mit verschiedenen Verzögerungszeiten. Aus der Verzögerungszeitdifferenz und der entsprechenden Positionsänderung wird die Tropfen geschwindigkeit berechnet. Weitere Ergebnisse der Bildanalyse ist die Erfassung von Satellitentropfen oder Tropfenausfällen, falls der Dispenser verstopft oder der Auslösedruck im Dispenser zu niedrig ist. Es besteht ferner die Möglichkeit und bei bestimmten Anwendungen die Notwendigkeit, die Amplitude und Dauer des Auslösesignals des Dispensers durch Beobachtung der Tropfeneigenschaften auf gewünschte Kenngrößen oder zur Qualitätskontrolle zu optimieren.

Nach Analyse der Parameter eines Dispensers werden aufeinanderfolgend alle Dispenser eines Dispensierkopfes zur Meßlichtstrecke gefahren. Für jeden der Dispenser erfolgt dann der genannte Meßablauf.

Durch die Dispensierkopfpositionierung bleiben vorteilhafterweise die Länge des Beleuchtungslichtwegs und des Bildaufnahmelichtwegs unverändert, so daß die Tropfenerzeugungsvorgänge an jedem der Dispenser unter gleichbleibenden optischen Bedingungen aufgenommen und mit hoher Genauigkeit und Reproduzierbarkeit analysiert werden können.

## Patentansprüche

1. Bildaufnahmeanordnung (10) für einen Dispensierkopf (50) mit einer Vielzahl von Dispensern (51, 52, 53, ...), bei der ein vorbestimmter Lichtweg von einer Beleuchtungseinrichtung (20) zu einer Bildaufnahmeeinrichtung (40) einen zu erfassenden Tropfenabgabebereich eines tropfengebenden Dispensers (52) durchsetzt,
**dadurch gekennzeichnet,**
**daß** eine Umlenkeinrichtung (30) vorgesehen ist, mit der eine Meßlichtstrecke (33) entlang einer vorbestimmten Bezugslinie durch den Tropfenabgabebereich gebildet wird, und die Beleuchtungs- und Bilderfassungseinrichtungen (20, 40) in Bezug auf die Tropfenabgaberichtung mit einem Abstand von der Bezugslinie angeordnet sind.

2. Bildaufnahmeanordnung gemäß Anspruch 1, bei der die Umlenkeinrichtung (30) mindestens einen zu der Bezugslinie um einen ersten Umlenkwinkel geneigten Spiegel enthält, der Licht aus der Meßlichtstrecke (33) auslenkt.

3. Bildaufnahmeanordnung gemäß Anspruch 1, bei der die Umlenkeinrichtung (30) zwei zu der Bezugslinie um einen ersten bzw. zweiten Umlenkwinkel geneigte Spiegel enthält, von denen ein erster Spiegel (31) Licht von der Beleuchtungseinrichtung (20) in die Meßlichtstrecke (33) und ein zweiter Spiegel (32) Licht aus der Meßlichtstrecke zu der Bildaufnahmeeinrichtung (40) lenkt.

4. Bildaufnahmeanordnung gemäß Anspruch 3, bei der die ersten und zweiten Spiegel (31, 32) in die Abstände zwischen dem zu erfassenden, tropfengebenden Dispenser (52) und den zu diesem benachbarten Dispensern hineinragen.

5. Bildaufnahmeanordnung gemäß Anspruch 3, bei der ein dritter Spiegel (22), der Licht von der Beleuchtungseinrichtung (20) auf den ersten Spiegel (31) lenkt, und ein vierter Spiegel vorgesehen sind, der Licht vom zweiten Spiegel (32) zur Bildaufnahmeeinrichtung (40) lenkt.

6. Bildaufnahmeanordnung gemäß einem der vorhergehenden Ansprüche, bei der die Beleuchtungseinrichtung (20) einen gepulsten Lichtemitter und die Bildaufnahmeeinrichtung (40) eine Kamera mit einem Objektiv enthalten.

7. Meßanordnung zur Tropfenbildaufnahme an einem zu erfassenden, tropfengebenden Dispenser (52) einer Vielzahl von Dispensern eines Dispensierkopfes (50) mit einer Bildaufnahmeanordnung gemäß einem der Ansprüche 1 bis 6, bei der die Beleuchtungs- und Bildaufnahmeeinrichtung (20, 40) in einer Trägerebene angeordnet sind, über der der Dispensierkopf verfahrbar ist, so daß sich die Spitzen der Dispenser in einer zu der Trägerebene parallelen Bezugsebene bewegen, wobei die Umlenkeinrichtung (30) die Meßstrecke (33) mit einem senkrechten Abstand von der Trägerebene und unmittelbar benachbart zur Bezugsebene bildet.

8. Meßanordnung gemäß Anspruch 7, bei der die Länge der Meßlichtstrecke (33) im wesentlichen gleich dem Abstand (d) von benachbarten Dispensern des Dispensierkopfes ist.

9. Verfahren zur Tropfenbildaufnahme an einem zu erfassenden, tropfengebenden Dispenser (52) eines Dispensierkopfs (50) unter Verwendung einer Bildaufnahmeanordnung gemäß einem der Ansprüche 1 bis 6, bei dem der Dispensierkopf in Bezug auf die Bildaufnahmeanordnung so positioniert wird, daß der Dispenser in die Meßlichtstrecke (33) ragt.

10. Verfahren gemäß Anspruch 9, bei dem zur Bildaufnahme eine Tropfenfolge mit veränderlichen Verzögerungszeiten zwischen einem Auslösesignal des Dispensers und einem Triggersignal der als Stroboskop betriebenen Beleuchtungseinrichtung (20) erfaßt wird.

11. Verfahren gemäß Anspruch 9 oder 10, bei dem vor der Bildaufnahme eine Referenzbildaufnahme mit einer tropfenfreien Meßstrecke erfolgt und aus den aufgenommenen Tropfenbildern und den Referenzbildern zur Bildbearbeitung Differenzbilder erzeugt werden.

## Claims

1. Image-recording arrangement (10) for a dispensing head (50), having a multiplicity of dispensers (51, 52, 53, ...) in which a predetermined light path from an illumination device (20) to an image-recording device (40) penetrates a drop discharge region to be detected of a drop-producing dispenser (52),
**characterised in that**
a deflection device (30) is provided with which a measuring light stretch (33) along a predetermined reference line is formed through the drop discharge region, and the illumination- and image-recording devices (20, 40) are disposed with respect to the drop discharge direction at a spacing from the reference line.

2. Image-recording arrangement according to claim 1, in which the deflection device (30) contains at least one mirror inclined towards the reference line by a first deflection angle, said mirror deflecting light from the measuring light stretch (33).

3. Image-recording arrangement according to claim 1, in which the deflection device (30) contains two mirrors inclined towards the reference line by a first or second deflection angle, a first mirror (31) of which directs light from the illumination device (20) into the measuring light stretch (33) and a second mirror (32) directs light from the measuring light stretch to the image recording device (40).

4. Image-recording arrangement according to claim 3, in which the first and second mirrors (31, 32) protrude into the spacings between the drop-producing dispenser (52) to be detected and the dispensers adjacent thereto.

5. Image-recording arrangement according to claim 3, in which there are provided a third mirror, which directs light from the illumination device (20) towards the first mirror (31), and a fourth mirror, which directs light from the second mirror (32) to the image-recording device (40).

6. Image-recording arrangement according to one of the preceding claims, in which the illumination device (20) contains a pulsed light emitter and the image-recording device (40) contains a camera with an objective.

7. Measuring arrangement for drop image-recording on a drop-producing dispenser (52) to be detected of a multiplicity of dispensers of a dispensing head (50), having an image-recording arrangement according to one of the claims 1 to 6, in which the illumination and image-recording device (20, 40) are disposed in a carrier plane, above which the dispensing head is movable so that the tips of the dispensers move in a reference plane which is parallel to the carrier plane, the deflection device (30) forming the measuring stretch (33) with a perpendicular spacing from the carrier plane and directly adjacent to the reference plane.

8. Measuring arrangement according to claim 7, in which the length of the measuring light stretch (33) is essentially the same as the spacing (d) from the adjacent dispensers of the dispensing head.

9. Method for drop image-recording on a drop-producing dispenser (52) to be detected of a dispensing head (50) using an image-recording arrangement according to one of the claims 1 to 6, in which the dispensing head is positioned with respect to the image-recording arrangement such that the dispenser protrudes into the measuring light stretch (33).

10. Method according to claim 9, in which, for the image-recording, a drop sequence is detected with variable delay times between a trigger signal of the dispenser and a trigger signal of the illumination device (20) operated as a stroboscope.

11. Method according to claim 9 or 10, in which, before the image-recording, a reference image-recording is effected with a drop-free measuring stretch and, from the recorded drop images and the reference images, differential images are produced for image processing.

## Revendications

1. Dispositif de prise de vue (10) pour une tête de distribution (50) comprenant un grand nombre de distributeurs (51, 52, 53,...), avec lequel un chemin optique prédéfini allant d'un dispositif d'éclairage (20) à un dispositif de prise de vue (40) traverse une zone de distribution de gouttes à enregistrer d'un distributeur (52) générant des gouttes, **caractérisé en ce qu'**il est prévu un système d'inversion (30), avec lequel un tronçon de lumière de mesure (33) est formé le long d'une ligne de référence prédéfinie par la zone de distribution de gouttes, et les dispositifs d'éclairage et d'enregistrement d'image, (20, 40) sont disposés par rapport au sens de distribution de gouttes avec un espacement par rapport à la ligne de référence.

2. Dispositif de prise de vue selon la revendication 1, sur lequel le système de déviation (30) contient au moins un miroir incliné d'un premier angle de déviation par rapport à la ligne de référence, qui dévie de la lumière du tronçon de lumière de mesure (33).

3. Dispositif de prise de vue selon la revendication 1, sur lequel le système de déviation (30) contient deux miroirs inclinés d'un premier et d'un deuxième angle de déviation par rapport à la ligne de référence, dont un premier miroir (31) guide de la lumière du dispositif d'éclairage (20) dans le tronçon de lumière de mesure (33) et un deuxième miroir (32) guide de la lumière du tronçon de lumière de mesure vers l'appareil de prise de vue (40).

4. Dispositif de prise de vue selon la revendication 3, sur lequel les premiers et second miroirs (31, 32) dépassent dans les intervalles entre le distributeur (52) à enregistrer et distribuant des gouttes et les distributeurs voisins de ce premier distributeur.

5. Dispositif de prise de vue selon la revendication 3, sur lequel il est prévu un troisième miroir (22), qui guide de la lumière de l'appareil d'éclairage (20) vers le premier miroir (31), et un quatrième miroir qui guide de la lumière du deuxième miroir (32) vers l'appareil de prise de vue (40).

6. Dispositif de prise de vue selon l'une quelconque des revendications précédentes, sur lequel l'appareil d'éclairage (20) et l'appareil de prise de vue (40) contiennent respectivement un émetteur de lumière pulsé et une caméra avec un objectif.

7. Dispositif de mesure pour la prise de vue de gouttes sur un distributeur (52), à enregistrer et générateur de gouttes, d'un grand nombre de distributeurs d'une tête de distribution (50) avec un dispositif de prise de vue selon l'une quelconque des revendications 1 à 6, sur lequel l'appareil d'éclairage et l'appareil de prise de vue (20, 40) sont disposés dans un plan support, au-dessus duquel la tête de distribution peut être déplacée, de sorte que les extrémités des distributeurs se déplacent dans un plan de référence parallèle au plan support, le système de déviation (30) constituant le tronçon de mesure (33) avec un espacement vertical par rapport au plan support et directement voisin du plan de référence.

8. Dispositif de mesure selon la revendication 7, sur lequel la longueur du tronçon de lumière de mesure (33) est sensiblement identique à la distance (d) par rapport aux distributeurs voisins de la tête de distribution.

9. Procédé pour la prise de vue de gouttes sur un générateur (52), à enregistrer et distributeur de gouttes, d'une tête de distribution (50) en utilisant un dispositif de prise de vue selon l'une quelconque des revendications 1 à 6, avec lequel la tête de distribution est positionnée par rapport au dispositif de prise de vue de façon que le distributeur dépasse dans le tronçon de lumière de mesure (33).

10. Procédé selon la revendication 9, avec lequel on enregistre pour la prise de vue une succession de gouttes avec des temporisations variables entre un signal de déclenchement du distributeur et un signal de déclenchement de l'appareil d'éclairage (20) exploité comme stroboscope.

11. Procédé selon la revendication 9 ou 10, avec lequel on effectue une prise de vue de référence avec un tronçon de mesure sans gouttes avant la prise de vue et on génère des image de différence à partir des images de gouttes enregistrées et des images de référence pour le traitement d'image.
